# EUROPÄISCHE PATENTSCHRIFT

(11) **EP 3 513 111 B1**
(45) Veröffentlichungstag und Bekanntmachung des Hinweises auf die Patenterteilung: **07.01.2026**
(21) Anmeldenummer: 17768446.1
(22) Anmeldetag: 15.09.2017
(51) Int. Cl.: F16L 37/23, F16L 37/36, F16L 41/02

(54) **ANSCHLUSSADAPTER, INSBESONDERE FÜR KLIMAANLAGEN**
HYDRAULIC COUPLER
COUPLEUR HYDRAULIQUE

(30) Priorität: 16.09.2016 AT 508352016
(43) Veröffentlichungstag der Anmeldung: 24.07.2019
(73) Patentinhaber: AVL DiTest GmbH, 8020 Graz (AT); Carl Kurt Walther GmbH & Co. KG, 42781 Haan (DE)
(72) Erfinder: HEINRICH, Dirk, 42799 Leichlingen (DE); KÖPP, Andreas, 41542 Dormagen (DE)
(74) Vertreter: Patentanwälte Pinter & Weiss OG
(86) Internationale Anmeldenummer: PCT/EP2017/073286
(87) Internationale Veröffentlichungsnummer: WO 2018/050823

(56) Entgegenhaltungen:
- WO-A2-2004/005787
- JP-A- 2005 331 151
- JP-A- 2015 059 637
- US-A- 3 680 591
- US-A- 5 088 519
- US-A1- 2003 140 971
- US-B1- 6 450 199

## Beschreibung

Die Erfindung betrifft einen Anschlussadapter zur Herstellung einer lösbaren Fluidverbindung zwischen einem ersten Fluidsystem und einem zweiten Fluidsystem, insbesondere zur Herstellung einer lösbaren Fluidverbindung zwischen einem Fluidsystem einer Klimaanlage und dem Fluidsystem eines Klimaservicegeräts, wobei der Anschlussadapter ein Schaltventil aufweist, welches über ein Betätigungselement betätigbar ist, um eine Fluidverbindung zwischen einem in einem Gehäuse des Anschlussadapters vorgesehenen Druckraum und einem in dem Gehäuse vorgesehenen Ventilraum selektiv freizugeben und zu verschließen, wobei das Betätigungselement als Drehgriff ausgebildet ist, der zur Betätigung des Schaltventils in eine Gewindebohrung eines Gehäuses einschraubbar ist, wobei vom Ventilraum ein Entlüftungsweg aus dem Anschlussadapter herausführt, welcher Entlüftungsweg durch eine Entlüftungssperre verschließ- und öffenbar ist, wobei über ein Anschlussorgan eine Fluidverbindung von dem Druckraum zu dem ersten Fluidsystem herstellbar ist, wobei der Ventilraum mit einer Schnellverschlussbuchse zum Anschließen eines Anschlusselements des zweiten Fluidsystems in Fluidverbindung steht, wobei der Anschlussadapter einen Verriegelungsmechanismus für die Schnellverschlussbuchse aufweist und wobei der Verriegelungsmechanismus auf eine verriegelte Stellung eingeschränkt ist, wenn die Entlüftungssperre den Entlüftungsweg verschließt.

Anschlussadapter werden beispielsweis verwendet, um eine sichere und lösbare Verbindung zwischen zwei Fluidsystemen herzustellen. Dies ist beispielsweise erforderlich, um Klimaanlagen, insbesondere KFZ-Klimaanlagen, zum Befüllen oder zur Durchführung eines Klimaservices mit einem Klimaservicegerät bzw. einem Kältemittelspeicher zu verbinden. Bisherige Lösungen für Anschlussadapter zur Befüllung/Entleerung von Klimaanlagen, insbesondere von Klimaanlagen in der Automobilindustrie, die CO2 als Kältemittel verwenden, basieren auf vorhandenen Lösungen für andere Kältemittel und bieten nicht die hohen Dichtheitsanforderung bei gleichzeitig langer Lebensdauer/Betriebszyklen.

Auch bieten bisherige Lösungen keine Dauerhaltbarkeit der Dichtsysteme bei gleichzeitig hoher Dichtheit im Betrieb unter Druck, insbesondere wenn CO2 als Kältemittel verwendet wird. Entweder wird eine zweite Energiequelle für den Betrieb benötigt oder mechanisch anfällige Dichtsysteme kommen zu Einsatz. Die Ursachen dafür sind hauptsächlich in den Dichtsystemen bzw. Dichtungsanordnungen für die Entlüftungsfunktion zu finden.

DE 10 2009 012 267 A1 offenbart ein über zwei Kippventile schaltbares 3/2-Wege-Ventil zum Anschließen einer Serviceeinrichtung an eine Klimaanlage. Beide Kippventile werden über einen gemeinsamen Steuerkolben gestellt, wobei ein Kippventil das Hauptventil darstellt, das die Fluidsysteme der Serviceeinrichtung und der Klimaanlage miteinander verbindet bzw. trennt, und das andere Kippventil der Entlüftung dient.

WO 2004/005787 A1 und US 2003/0140971 A1 offenbaren jeweils eine Vorrichtung gemäß dem Oberbegriff von Anspruch 1, bzw. ein Verfahren gemäß dem Oberbegriff von Anspruch 5.

Es ist das Ziel der Erfindung, einen Anschlussadapter zu schaffen, der die Nachteile des Standes der Technik vermeidet, einfach und sicher in der Anwendung ist, und eine hohe Standfestigkeit aufweist.

Erfindungsgemäß werden diese und weitere Ziele durch einen Anschlussadapter der eingangs genannten Art erreicht, bei dem sich die Entlüftungssperre beim Betätigen des Betätigungselements in axialer Richtung mit dem Betätigungselement mitbewegt, wobei das Betätigungselement beim Einschrauben in Anlagerung an einen Ventilkopf des Schaltventils bringbar ist, nachdem die Entlüftungssperre den Entlüftungsweg verschlossen hat, wobei durch ein weiteres Bewegen des Betätigungselements in Richtung zu der Schnellverschlussbuchse hin die Fluidverbindung zwischen dem Druckraum und dem Ventilraum durch ein Verschieben eines Verschlussteils und eines Ventilzapfens des Schaltventils in Richtung zur Schnellverschlussbuchse hin öffenbar ist.

In vorteilhafter Weise ist das Betätigungselement als Drehgriff ausgebildet sein, der zur Betätigung des Schaltventils in eine Gewindebohrung eines Gehäuses einschraubbar ist. Dies erlaubt eine intuitive, einfache und sichere Betätigung bei kompakter Bauform.

In vorteilhafter Weise Ausführungsform gelangt das Betätigungselement dabei beim Einschrauben in Anlagerung an einen Ventilkopf des Schaltventils, nachdem die Entlüftungssperre den Entlüftungsweg verschlossen hat. Dies stellt sicher, dass ein vorzeitiges Öffnen des Hauptventils (also während der Entlüftungsweg noch offen ist) nicht möglich ist.

In vorteilhafter Weise kann das Betätigungselement einen Anschlag aufweisen, der den Verriegelungsmechanismus in der verriegelten Stellung blockiert, wenn die Entlüftungssperre den Entlüftungsweg verschließt. Dies stellt eine konstruktiv einfache und effektive Maßnahme dar, um den Verriegelungsmechanismus erfindungsgemäß einzuschränken.

In einer weiteren vorteilhaften Ausführungsform kann die Entlüftungssperre hülsenartig ausgebildet und auf dem Gehäuse entlang einer Ventilachse verschiebbar angeordnet sein. Dies erlaubt eine konstruktiv einfache Umsetzung mit einem Minimum an beweglichen Teilen.

In bevorzugter Weise kann an dem Gehäuse ein Dichtungselement vorgesehen sein, an dem die Entlüftungssperre beim Verschließen des Entlüftungsweges in dichtenden Eingriff gelangt. Dabei können einfache, kostengünstige und langlebige Dichtungselemente, wie etwa ein O-Ring, verwendet werden.

In einer weiteren vorteilhaften Ausführungsform kann das Betätigungselement mit der Entlüftungssperre drehbar verbunden sein. Dadurch kann die Entlüftungssperre sich in axialer Richtung rein translatorisch mit dem Betätigungselement mitbewegen, ohne an die Drehbewegung des Betätigungselements gekoppelt zu sein. Weiters lässt sich das zulässige Ausmaß der Bewegung des Betätigungselements über die Entlüftungssperre einfach begrenzen.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 eine Schnittansicht des erfindungsgemäßen Anschlussadapters in einer ersten Stellung,
Fig. 2 den Anschlussadapter der Fig. 1 in einer zweiten Stellung und
Fig. 3 den Anschlussadapter der Fig. 1 in einer dritten Stellung.

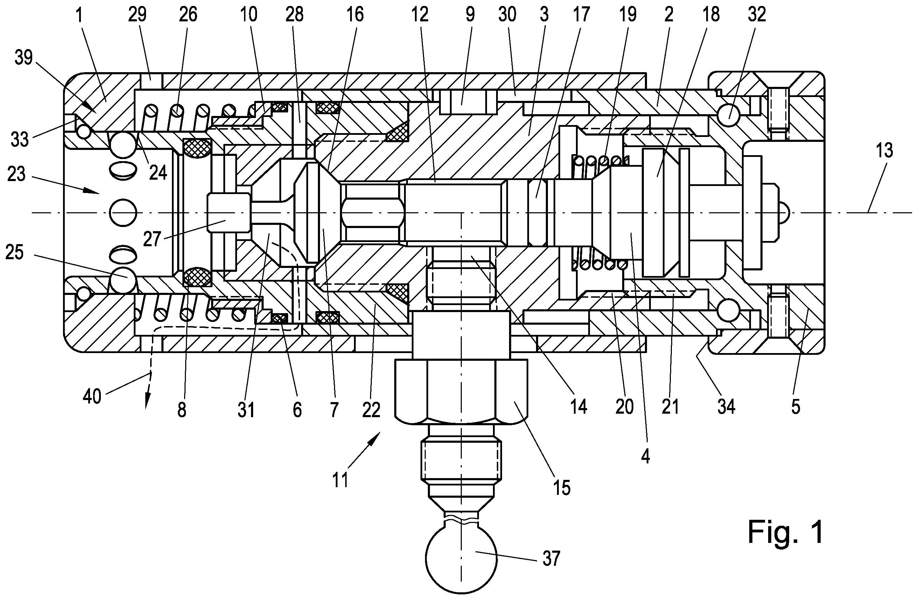

Der erfindungsgemäße Anschlussadapter 11 weist ein Gehäuse 3 auf, welches einen Druckraum 12 umfasst. Der Druckraum 12 ist im Wesentlichen als eine entlang einer Ventilachse 13 verlaufende zentrale Ausnehmung bzw. Bohrung ausgebildet, in der ein Schaltventil 4 entlang der Ventilachse 13 verlagerbar angeordnet ist. Quer zur Ventilachse mündet eine Zuleitung 14 im Druckraum 12. An der Zuleitung ist ein Anschlussorgan 15 vorgesehen, über das der Anschlussadapter 11 beispielsweise über eine Leitung mit einem Servicegerät bzw. einem Speicher für das Kühlmittel in Verbindung steht. In Fig. 1 ist schematisiert ein erstes Fluidsystem 37 dargestellt, mit dem die Zuleitung bzw. das Anschlussorgan in Verbindung steht.

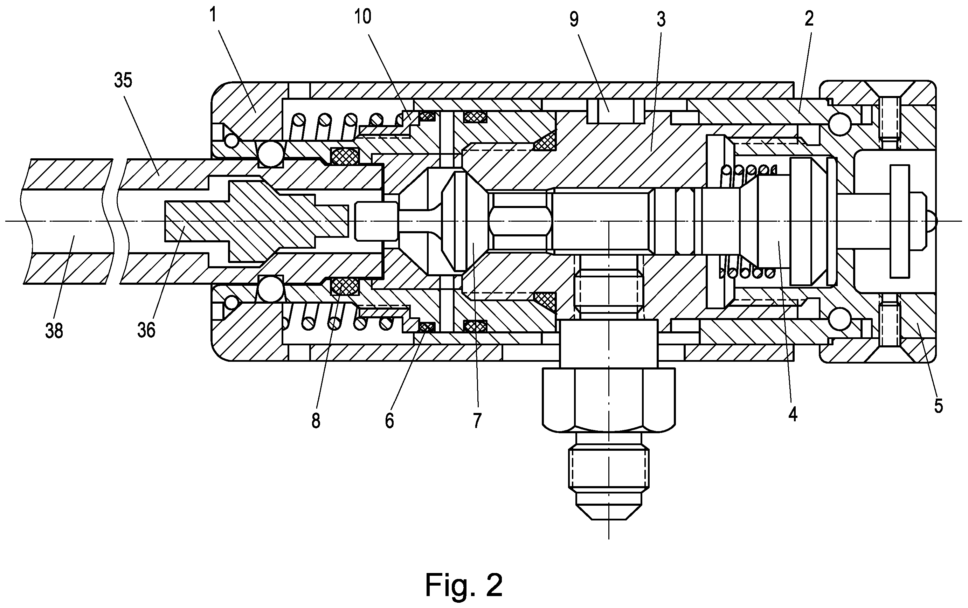

Das Schaltventil 4 weist an einer Seite einen Verschlussteil 7 auf, der in der Schließstellung des Schaltventils 4 (Fig. 1 und 2) an einer konischen Ventilfläche 16 den Druckraum 12 abdichtet. An der der Ventilfläche 16 axial gegenüberliegenden Seite des Druckraums 12 ist der Druckraum 12 durch einen passförmig erweiterten Durchmesser des Schaltventils 4 begrenzt und mit entsprechenden Dichtorganen 17 abgedichtet. Das dem Verschlussteil 7 axial gegenüberliegende Ende des Schaltventils 4 weist einen im Wesentlichen pilzartig ausgebildeten Ventilkopf 18 auf, an dem eine Ventilfeder 19 ansetzt, die das Schaltventil 4 in die Schließstellung drückt.

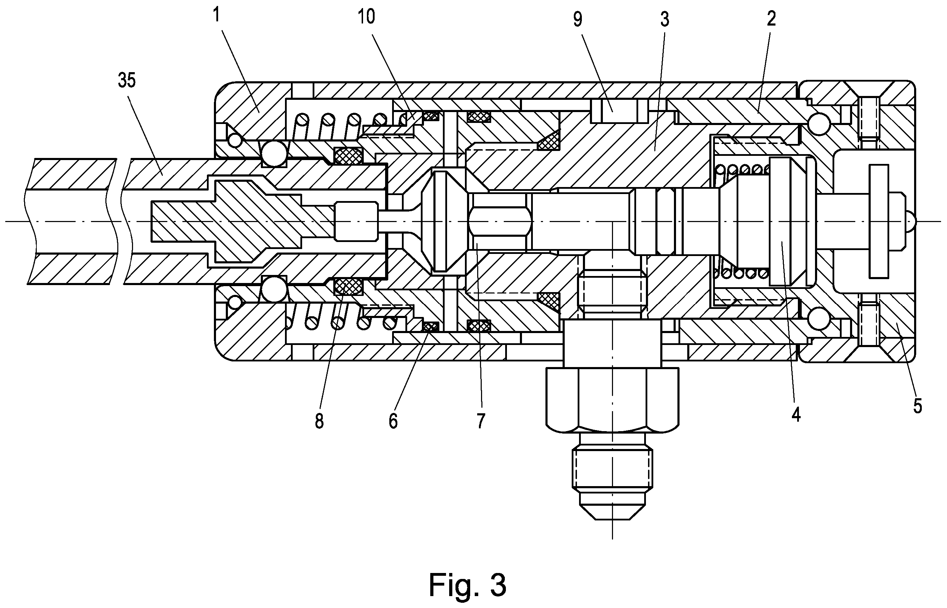

Das Gehäuse 3 weist auf Seiten der Ventilfeder 19 und des Ventilkopfes 18 eine axiale Gewindebohrung 20 auf, in die ein als Drehgriff ausgebildetes Betätigungselement 5 mit einem Stellgewinde 21 ein- und ausschraubbar angeordnet ist. Durch Einschrauben des Betätigungselements 5 gelangt dieses in Anlagerung an den Ventilkopf 18 (Fig. 2) und drückt in weiterer Folge den Ventilkopf 18 und damit das ganze Schaltventil 4 gegen die Kraft der Ventilfeder in eine geöffnete Stellung (wie sie in Fig. 3 dargestellt ist).

Auf Seiten der Ventilfläche 16 ist ein Teil des Gehäuses 3 als Anschlusshülse 22 ausgebildet, wobei die Anschlusshülse 22 eine Schnellverschlussbuchse 23 aufweist, mit dem der Anschlussadapter 11 an ein entsprechend ausgebildetes Anschlusselement 35 (in Fig. 2 und 3 schematisch dargestellt), beispielsweise einen Serviceanschluss einer KFZ-Klimaanlage, angeschlossen werden kann. In bekannter Weise sind dazu in radialen Bohrungen 24, die im Bereich der Schnellverschlussbuchse 23 in die Anschlusshülse 22 eingebracht sind, jeweils Sperrkugeln 25 eingesetzt, die von einer auf die Anschlusshülse 22 aufgeschobenen Verriegelungshülse 1 so in die (zur Innenwandung der Anschlusshülse 22 hin verjüngt ausgebildeten) radialen Bohrungen 23 gedrückt werden, dass sie in die Schnellverschlussbuchse 23 ragen, wobei sie entweder ein darin eingesetztes Anschlusselement 35 fixieren oder das Einstecken eines solchen Anschlusselements 35 in die Schnellverschlussbuchse 23 blockieren. Die federbelastete Verriegelungshülse 1 und die in die Bohrungen 23 eingesetzten Sperrkugeln 25 bilden somit einen Verriegelungsmechanismus 39 für die Schnellverschlussbuches 23 aus.

Zum Anschließen und Entfernen des Anschlusselements 35 wird die Verriegelungshülse 1 gegen den Druck einer Spannfeder 26 auf der Anschlusshülse 22 gleitend zurückgezogen, bis ein erweiterter Bereich 33 der Verriegelungshülse 1 über den Sperrkugeln 25 angeordnet ist, und diese in den erweiterten Bereich 33 "ausweichen" können und dadurch ein Ein- und Ausstecken des Anschlusselements ermöglichen. Die Anschlusshülse 22 kann ein- oder mehrteilig ausgebildet sein und sie kann lösbar oder fix mit den anderen Teilen des Gehäuses 3 verbunden sein. Gegebenenfalls kann das Gehäuse 3 auch einteilig ausgebildet sein, sofern dies herstellungsbedingt möglich ist.

Zur Abdichtung des in die Schnellverschlussbuchse 23 eingesetzten Anschlusselements 35 ist in der Schnellverschlussbuchse 23 eine Anschlussdichtung 8 vorgesehen. Der Verschlussteil 7 des Schaltventils 4 weist an seiner dem Druckraum abgewandten Seite einen in Richtung zur Schnellverschlussbuchse 23 hin axial abstehenden Ventilzapfen 27 auf, dessen Ende bis in den Bereich der Schnellverschlussbuchse 23 ragt. Der Ventilzapfen 27 dient dazu, einen Ventilkörper eines gegebenenfalls in dem Anschlusselement 35 vorgesehenen Sperrventils 36 aufzudrücken, wenn das Anschlusselement 35 in die Schnellverschlussbuchse 23 eingesetzt ist und die Fluidverbindung hergestellt wird. Der Ventilzapfen 27 ist vorzugsweise so dimensioniert, dass er das Sperrventil 36 im Anschlusselement 35 erst dann öffnet, wenn auch das Schaltventil 4 öffnet und sich der Ventilzapfen 27 zusammen mit dem Verschlussteil 7 in Öffnungsrichtung, das heißt in Richtung zur Schnellverschlussbuchse 23 hin, axial verschiebt (siehe Fig. 2 und 3).

Im Bereich zwischen der Schnellverschlussbuchse 23 (bzw. dem Ende eines darin eingesetzten Anschlusselements) und dem an der Ventilfläche 16 anliegenden Verschlussteil 7 (das Volumen in dieser Bereich wird im Folgenden als Ventilraum 31 bezeichnet) sind in der Anschlusshülse 22 eine Anzahl an Entlüftungskanälen 28 radial angeordnet, über die ein in diesem Bereich vorhandener Restdruck abgeleitet werden muss, bevor das Anschlusselement 35 aus der Schnellverschlussbuchse 23 entfernt wird. Vor allem bei den hohen Drücken von etwa 150 Bar, die für CO2-Klimaanlagen erforderlich sind, wäre es ein erhebliches Sicherheitsrisiko, wenn das Anschlusselement 35 bei einem noch vorhandenen Restdruck geöffnet werden könnte, da dann der Druck unkontrolliert und schlagartig entweicht.

Um die Entlüftungskanäle 28 für den "normalen" Ventilbetrieb abzudichten, ist auf dem Gehäuse eine hülsenartig ausgebildete Entlüftungssperre 2 verschiebbar angeordnet. Die Entlüftungssperre 2 weist eine Führungsschlitz 30 auf, in die ein am Gehäuse 3 vorgesehenes Führungselement 9 eingreift, welches die Entlüftungssperre 2 gegen ein Verdrehen sichert. Das Führungselement 9 kann gegebenenfalls auch über die Außenwandung der Entlüftungssperre 2 hinausragen und in eine entsprechende Nut in der Verriegelungshülse 1 eingreifen, sodass auch diese gegen ein Verdrehen gesichert ist. Wenn die Entlüftungssperre 2 in Richtung zur Schnellverschlussbuchse 23 hin verschoben wird, bedeckt sie zuerst die äußeren Öffnungen der Entlüftungskanäle 28 und gelangt dann mit einem Dichtungselement 6 in Eingriff (gegebenenfalls können auch mehrere Dichtungselemente vorgesehen sein), das an der Außenwandung der Anschlusshülse 22, bzw. in entsprechenden, in der Anschlusshülse vorgesehenen Dichtungsnuten, angeordnet ist. Die Entlüftungssperre 2 dichtet somit die Entlüftungskanäle 28 druckdicht ab, sobald die Entlüftungssperre 2 ausreichend weit in Richtung der Schnellverschlussbuchse 23 verschoben wurde (Fig. 2 und 3). Das Dichtungselement 6, das gegenüber den Entlüftungskanälen 28 auf Seiten der Schnellverschlussbuchse 23 angeordnet ist, ist in einer Dichtungsnut angeordnet, die durch einen auf die Anschlusshülse 22 aufschraubbaren Halter 10 gebildet wird. Dies erleichtert den Austausch dieses aufgrund des häufig wechselnden Eingriffs mit der Entlüftungssperre 2 stark beanspruchten Dichtungselements 6.

Die Verriegelungshülse 1 weist Entlüftungsbohrungen 29 auf, über die der Raum innerhalb der Verriegelungshülse 1, entlüftet werden kann. Da in diesen Raum auch die Entlüftungskanäle 28 münden, wenn die Entlüftungssperre 2 in ihrer zurückgeschobenen Position ist (Fig. 1), kann der Ventilraum 31 durch Zurückschieben der Entlüftungssperre 2 über die Entlüftungskanäle 28 und die Entlüftungsbohrungen 29 entlüftet werden. (Als Richtung "zurück" wird im Zusammenhang mit der gegenständlichen Erfindung die axiale Richtung, die von der Schnellverschlussbuchse 23 weg weist, bezeichnet).

An ihrem rückwärtigen, d.h. der Schnellverschlussbuchse 23 entfernteren Ende, ist die Entlüftungssperre 2 über ein Kugellager 32 mit dem Betätigungselement 5 drehbar verbunden, wobei das Kugellager 32 eine Drehbewegung des Betätigungselements 5 relativ zur Entlüftungssperre 2 zulässt. Dadurch bewegt sich die Entlüftungssperre 2 in axialer Richtung mit dem Betätigungselement 5 mit, ohne sich mit dem Betätigungselement mitzudrehen. Somit ist sowohl die Betätigung des Verschlussteils 7 (also des Hauptventils des Anschlussadapters), als auch die Betätigung des Ventilzapfens 27, der das Sperrventil 36 des Anschlusselements 35 öffnet, als auch das Verschieben der Entlüftungssperre 2 mit einem einzigen Betätigungselement 5 möglich. Gleichzeitig wird die maximal mögliche "Auslenkbewegung" des Betätigungselements 5 durch den Führungsschlitz 30 und das Führungselement 9 begrenzt.

Die Verwendung des Anschlussadapters 11 wird im Folgenden unter Bezugnahme auf die Fig. 1 bis 3 beispielhaft erläutert. Die in Fig. 1 dargestellten Ausgangslage zeigt den Anschlussadapter 11 in einer inaktiven Stellung, wobei das der Verschlussteil 7 das Hauptventil geschlossen hält, der durch die Entlüftungskanäle 28 und die Entlüftungsbohrungen 29 definierte Entlüftungsweg 40 freigegeben ist, und wobei der Ventilzapfen 27 frei in den Bereich der Schnellverschlussbuches 23 ragt, in dem sich noch kein Anschlusselement 35 befindet. Über das Anschlussorgan 15 ist der Anschlussadapter 11 an das erste Fluidsystem 37 angeschlossen, beispielsweise ein Klimaservicegerät, mit dem altes Kühlmittel in einer KFZ-Klimaanlage abgeleitet, die Klimaanlage evakuiert und mit frischem Kühlmittel und Schmiermittel befüllt werden kann.

Um über die Schnellverschlussbuches 23 eine Verbindung zu einem zweiten Fluidsystem 38 herzustellen, das beispielsweise die Leitungen einer KFZ-Klimaanlage umfasst, ist für das zweite Fluidsystem 38 ein zu der Schnellverschlussbuchse 23 passendes Anschlusselement 35 vorgesehen (Fig. 2).

Um eine Verbindung zwischen dem ersten Fluidsystem 37 und dem zweiten Fluidsystem 38 herzustellen, etwa für ein Klimaservice oder auch zur erstmaligen Befüllung einer Klimaanlage, wird das Anschlusselement 35 in den Schnellverschlussbuchse 23 des Anschlussadapters 11 eingesteckt, wobei dazu die auf der Entlüftungssperre 2 gleitende Verriegelungshülse 1 so weit zurückgezogen werden muss, bis der erweiterte Bereich 33 der Verriegelungshülse 1 die Sperrkugeln 25 so weit freigibt, dass das Anschlusselement 35 vollständig in die Schnellverschlussbuchse 23 eingeschoben werden kann, d.h. bis der Verriegelungsmechanismus 39 geöffnet ist. Dabei wird das Anschlusselement 35 von der Anschlussdichtung 8 abgedichtet, der Ventilzapfen 27 ist jedoch in einer Lage, in der das Sperrventil 36 im Anschlusselement 35 noch nicht geöffnet wird. Dieser Anschlussvorgang ist nur möglich, wenn sich das Betätigungselement 5 in der maximal herausgedrehten Position befindet, da sonst die Verriegelungshülse 1 mit ihrem rückwärtigen Ende an einem am Betätigungselement vorgesehenen Anschlag 34 anstehen würde, bevor die Sperrkugeln 25 freigegeben werden. Dies stellt gleichzeitig sicher, dass sich auch die Entlüftungssperre 2 in der zurückgezogenen Position befindet, in der die Entlüftungskanäle 28 geöffnet sind und der Entlüftungsweg 40 freigegeben ist.

Um die Fluidverbindung zwischen dem ersten Fluidsystem 37 und dem zweiten Fluidsystem 38 herzustellen, wird nun das Betätigungselement 5 gedreht und eingeschraubt, wobei sich zuerst nur die Entlüftungssperre mit dem Betätigungselement 5 mitbewegt und die Entlüftungskanäle 28 verschließt, sodass der Ventilraum 31 nun hermetisch abgeschlossen ist. Diese Lage ist in Fig. 2 dargestellt. Es ist zu beachten, dass in dieser Lage zwar das Hauptventil und auch das Sperrventil 36 noch geschlossen sind, es aber nicht mehr möglich ist, die Sperre der Schnellverschlussbuches 23 zu lösen, da die Verriegelungshülse 1 an dem Anschlag 34 anstehen würde, bevor die Sperrkugeln 25 freigegeben würden. Die in Fig. 2 dargestellte Lage zeigt auch, dass das Betätigungselement 5 bereits mit dem Ventilkopf 18 in Kontakt ist, ein weiteres Einschrauben des Betätigungselements 5 würde also das Schaltventil 4 und damit den Verschlussteil 7 und den Ventilzapfen 25 in Richtung zur Schnellverschlussbuchse 23 hin verschieben und zuerst das Hauptventil öffnen, d.h. eine Fluidverbindung zwischen dem Druckraum 12 und dem Ventilraum 31 schaffen. In weiterer Folge gelangt dann der Ventilzapfen 27 in Anlagerung an das Sperrventil 36 und öffnet dieses, sodass nun auch eine Fluidverbindung zwischen dem Ventilraum 31 und dem zweiten Fluidsystem 38 geschaffen ist. Diese Stellung ist in Fig. 3 dargestellt. Es ist zu beachten, dass der Anschlag 34 des Betätigungselements 5 nun am hinteren Ende der Verriegelungshülse 1 ansteht bzw. nahezu ansteht, sodass ein Verschieben der Verriegelungshülse 1 im Wesentlichen nicht mehr möglich ist. Somit ist eine stabile Verbindung geschaffen und es können nun die verschiedenen Ableitungs-, Evakuier- bzw. Auffüllvorgänge über den Anschlussadapter durchgeführt werden.

Um die Verbindung zwischen Anschlusselement 35 und Anschlussadapter 11 danach wieder lösen zu können, wird der oben beschriebene Vorgang in umgekehrter Richtung ausgeführt, wobei das Betätigungselement 5 aus der Gewindebohrung 20 des Gehäuses 3 herausgeschraubt wird. Dabei schließt zuerst das Sperrventil 36 und der Ventilzapfen 27 löst sich von dem Sperrventil 36. Danach gelangt der Verschlussteil 7 in Anlagerung an die Ventilfläche 16, sodass auch das Hauptventil schließt (dies entspricht wieder der in Fig. 2 dargestellten Lage). Nun ist zu beachten, dass im Ventilraum 31 ein Restdruck vorherrscht, da Entlüftungskanäle 28 noch von der Entlüftungssperre 2 verschlossen sind. Durch die Position des Anschlags 34 ist sichergestellt, dass in dieser Stellung ein Entsperren der Schnellverschlussbuchse nicht möglich ist. Erst wenn das Betätigungselement 5 weit genug herausgeschraubt ist (also in die in Fig. 1 dargestellte Lage), und der Ventilraum 31 über die nunmehr offenen Entlüftungskanäle 28 und Entlüftungsbohrungen 29 (die den Entlüftungsweg 40 bilden) entlüftet wurde, ist es möglich, die Verriegelungshülse 1 weit genug zurückzuziehen, um die Sperrkugeln 25 freizugeben und dadurch den Verriegelungsmechanismus 39 zu lösen. Nun kann auch das Anschlusselement 35 aus der Schnellverschlussbuchse 23 herausgezogen werden und der Anschlussadapter 11 befindet sich wieder in der in Fig. 1 dargestellten Ausgangslage.

Die obige Beschreibung stellt rein beispielhaft eine bevorzugte Ausführungsform der Erfindung dar, dem Fachmann ist jedoch klar, dass die Erfindung auch auf anderer Weise verwirklicht werden kann. Beispielsweise ist es nicht erforderlich, dass der Anschlussadapter mit dem Servicegerät verbunden ist, und über die Schnellverschlussbuchse 23 mit dem Anschlusselement der Klimaanlage verbunden wird, sondern es kann auch das Anschlussadapter 11 einen Teil der Klimaanlage darstellen. In diesem Fall wäre für das Klimaservicegerät lediglich ein Anschlusselement erforderlich, das mit dem Anschlussadapter der Klimaanlage eingesteckt wird. Allgemein kann der erfindungsgemäße Anschlussadapter als Ventil für unterschiedliche Anwendungen vorteilhaft genutzt werden, bei denen zwei Fluidsysteme miteinander verbunden werden sollen.

### Bezugszeichenliste:

Verriegelungshülse (1)
Entlüftungssperre (2)
Gehäuse 3
Schaltventil (4)
Betätigungselement (5)
Dichtungselement (6)
Verschlussteil 7
Anschlussdichtung 8
Führungselement 9
Halter (10)
Anschlussadapter 11
Druckraum 12
Ventilachse 13
Zuleitung 14
Anschlussorgan 15
Ventilfläche 16
Dichtorgane 17
Ventilkopf 18
Ventilfeder 19
Gewindebohrung 20
Stellgewinde 21
Anschlusshülse 22
Schnellverschlussbuchse 23
radiale Bohrungen 24
Sperrkugeln 25
Spannfeder 26
Ventilzapfen 27
Entlüftungskanäle 28
Entlüftungsbohrungen 29
Führungsschlitz 30
Ventilraum 31
Kugellager 32
erweiterter Bereich 33
Anschlag 34
Anschlusselement 35
Sperrventil 36
erstes Fluidsystem 37
zweites Fluidsystem 38
Verriegelungsmechanismus 39
Entlüftungsweg 40

## Patentansprüche

1. Vorrichtung zum Verbinden eines ersten Fluidsystem (37) mit einem zweiten Fluidsystem (38) umfassend einen Anschlussadapter (11),
- wobei ein Anschlusselement (35) in eine Schnellverschlussbuchse (23) des Anschlussadapters (11) einsteckbar ist,
- wobei der Anschlussadapter (11) ein Schaltventil (4) aufweist, welches über ein Betätigungselement (5) betätigbar ist, um eine Fluidverbindung zwischen einem in einem Gehäuse (3) des Anschlussadapters (11) vorgesehenen Druckraum (12) und einem in dem Gehäuse (3) vorgesehenen Ventilraum (31) über ein Verschlussteil (7) am Schaltventil (4) selektiv freizugeben und zu verschließen, wobei der Verschlussteil (7) an seiner dem Druckraum (12) abgewandten Seite den in Richtung zur Schnellverschlussbuchse (23) hin axial abstehenden Ventilzapfen (27) aufweist, dessen Ende bis in den Bereich der Schnellverschlussbuchse (23) ragt,
- wobei das Betätigungselement (5) als Drehgriff ausgebildet ist, der zur Betätigung des Schaltventils (4) in eine Gewindebohrung (20) des Gehäuses (3) einschraubbar ist,
- wobei vom Ventilraum (31) ein Entlüftungsweg (40) aus dem Anschlussadapter (11) herausführt, welcher Entlüftungsweg (40) durch eine Entlüftungssperre (2) verschließ- und öffenbar ist,
- wobei über ein Anschlussorgan (15) eine Fluidverbindung von dem Druckraum (12) zu dem ersten Fluidsystem (37) herstellbar ist,
- wobei der Ventilraum (31) mit der Schnellverschlussbuchse (23) zum Anschließen des Anschlusselements (35) des zweiten Fluidsystems (38) in Fluidverbindung steht, in welchem ein Sperrventil (36) vorgesehen ist, und
- wobei der Anschlussadapter (11) einen Verriegelungsmechanismus (39) für die Schnellverschlussbuchse (23) aufweist, welchen eine federbelastete Verriegelungshülse (1) und in Bohrungen (24) eingesetzte Sperrkugeln (25) bilden,
**dadurch gekennzeichnet, dass** die auf der Entlüftungssperre (2) gleitende Verriegelungshülse (1) zurückziehbar ist, wodurch ein erweiterter Bereich (33) der Verriegelungshülse (1) die Sperrkugeln (25) so weit freigibt, dass das Anschlusselement (35) vollständig in die Schnellverschlussbuchse (23) einschiebbar ist, wobei das Anschlusselement (35) von einer Anschlussdichtung (8) abdichtbar ist und der Ventilzapfen (27) dabei in einer Lage ist, in der das Sperrventil (36) im Anschlusselement (35) nicht geöffnet ist, und wobei sich das Betätigungselement (5) in einer maximal herausgedrehten Position befindet, in welcher Entlüftungskanäle (28) geöffnet sind und der Entlüftungsweg (40) freigegeben ist;
dass die Entlüftungssperre (2) durch Drehen und Einschrauben des Betätigungselements (5) mit dem Betätigungselement (5) mitbewegbar ist und die Entlüftungskanäle (28) verschließt, sodass der Ventilraum (31) hermetisch abschließbar ist, wobei ein Hauptventil und auch das Sperrventil (36) noch geschlossen sind, wobei das Betätigungselement (5) einen Anschlag (34) aufweist, der den Verriegelungsmechanismus (39) in der verriegelten Stellung blockiert, wenn die Entlüftungssperre (2) den Entlüftungsweg (40) verschließt, wobei eine Sperre der Schnellverschlussbuchse (23) nicht mehr lösbar ist, da die Verriegelungshülse (1) am Anschlag (34) am Betätigungselement (5) ansteht, bevor die Sperrkugeln (25) freigebbar sind, und wobei das Betätigungselement (5) bereits mit einem Ventilkopf (18) in Kontakt ist,
dass durch weiteres Einschrauben des Betätigungselements (5) das Schaltventil (4) und damit das Verschlussteil (7) und der Ventilzapfen (25) in Richtung zu der Schnellverschlussbuchse (23) hin verschiebbar sind und zuerst das Hauptventil öffnen, um die Fluidverbindung zwischen dem Druckraum (12) und dem Ventilraum (31) zu schaffen,
und dass durch weiteres Einschrauben des Betätigungselements (5) der Ventilzapfen (27) an das Sperrventil (36) anlagerbar ist und das Sperrventil (36) öffnet, um eine Fluidverbindung zwischen Ventilraum (31) und dem zweitem Fluidsystem (38) im Anschlusselement (35) zu schaffen, wobei der Anschlag (34) des Betätigungselements (5) nun an einem hinteren Ende der Verriegelungshülse (1) ansteht, sodass ein Verschieben der Verriegelungshülse (1) nicht mehr möglich ist.

2. Vorrichtung nach Anspruch 1, **dadurch gekennzeichnet, dass** die Entlüftungssperre (2) hülsenartig ausgebildet ist und auf dem Gehäuse (3) entlang einer Ventilachse (13) verschiebbar angeordnet ist.

3. Vorrichtung nach Anspruch 2, **dadurch gekennzeichnet, dass** an dem Gehäuse (3) ein Dichtungselement (6) vorgesehen ist, an dem die Entlüftungssperre (2) beim Verschließen des Entlüftungsweges (40) in dichtenden Eingriff gelangt.

4. Vorrichtung nach einem der Ansprüche 1 bis 3, **dadurch gekennzeichnet, dass** das Betätigungselement (5) mit der Entlüftungssperre (2) drehbar verbunden ist.

5. Verfahren zum Verbinden eines ersten Fluidsystems (37) zu einem zweiten Fluidsystem (38), wobei ein Anschlusselement (35) in eine Schnellverschlussbuchse (23) eines Anschlussadapters (11) eingesteckt wird,
wobei der Anschlussadapter (11) ein Schaltventil (4) aufweist, welches über ein Betätigungselement (5) betätigt wird, um eine Fluidverbindung zwischen einem in einem Gehäuse (3) des Anschlussadapters (11) vorgesehenen Druckraum (12) und einem in dem Gehäuse (3) vorgesehenen Ventilraum (31) über ein Verschlussteil (7) am Schaltventil (4) selektiv freizugeben und zu verschließen,
wobei der Verschlussteil (7) an seiner dem Druckraum (12) abgewandten Seite den in Richtung zur Schnellverschlussbuchse (23) hin axial abstehenden Ventilzapfen (27) aufweist, dessen Ende bis in den Bereich der Schnellverschlussbuchse (23) ragt,
wobei das Betätigungselement (5) als Drehgriff ausgebildet ist, der zur Betätigung des Schaltventils (4) in eine Gewindebohrung (20) des Gehäuses (3) eingeschraubt wird, wobei vom Ventilraum (31) ein Entlüftungsweg (40) aus dem Anschlussadapter (11) herausführt, welcher Entlüftungsweg (40) durch eine Entlüftungssperre (2) verschlossen und geöffnet wird,
wobei über ein Anschlussorgan (15) eine Fluidverbindung von dem Druckraum (12) zu dem ersten Fluidsystem (37) hergestellt wird,
wobei der Ventilraum (31) mit der Schnellverschlussbuchse (23) zum Anschließen des Anschlusselements (35) des zweiten Fluidsystems (38) in Fluidverbindung steht,
und wobei der Anschlussadapter (11) einen Verriegelungsmechanismus (39) für die Schnellverschlussbuchse (23) aufweist, welchen eine federbelastete Verriegelungshülse (1) und in Bohrungen (23) eingesetzte Sperrkugeln bilden,
**dadurch gekennzeichnet, dass** zum Verbinden folgende Schritte ausgeführt werden:
a) Zurückziehen der auf der Entlüftungssperre (2) gleitenden Verriegelungshülse (1), wodurch ein erweiterter Bereich (33) der Verriegelungshülse (1) die Sperrkugeln (25) freigibt, und das Anschlusselement (35) vollständig in die Schnellverschlussbuchse (23) eingeschoben wird und das Anschlusselement (35) von einer Anschlussdichtung (8) abgedichtet wird und der Ventilzapfen (27) dabei in einer Lage ist, in der ein Sperrventil (36) im Anschlusselement (35) nicht geöffnet wird, und wobei sich das Betätigungselement (5) in einer maximal herausgedrehten Position befindet, in welcher Entlüftungskanäle (28) geöffnet werden und der Entlüftungsweg (40) freigegeben wird,
b) Drehen und Einschrauben des Betätigungselements (5), wobei zuerst nur die Entlüftungssperre (2) mit dem Betätigungselement (5) mitbewegt wird und die Entlüftungskanäle (28) verschließt, sodass der Ventilraum (31) hermetisch abgeschlossen wird, wobei ein Hauptventil und auch ein Sperrventil (36) noch geschlossen sind, wobei das Betätigungselement (5) einen Anschlag (34) aufweist, der den Verriegelungsmechanismus (39) in der verriegelten Stellung blockiert, wenn die Entlüftungssperre (2) den Entlüftungsweg (40) verschließt, wobei eine Sperre der Schnellverschlussbuchse (23) nicht mehr lösbar ist, da die Verriegelungshülse (1) am Anschlag (34) am Betätigungselement (5) anstehen würde, bevor die Sperrkugeln (25) freigegeben werden, und wobei das Betätigungselement (5) bereits mit einem Ventilkopf (18) in Kontakt ist, und damit sicherstellt, dass ein vorzeitiges Öffnen des Hauptventils nicht möglich ist;
c) Weiteres Einschrauben des Betätigungselements (5), wobei das Schaltventil (4) und damit der Verschlussteil (7) und der Ventilzapfen (27) in Richtung zur Schnellverschlussbuchse (23) hin verschoben werden, wodurch zuerst das Hauptventil geöffnet wird, um eine Fluidverbindung zwischen einem Druckraum (12), der im Anschlussadapter (11) vorgesehen ist, und dem Ventilraum (31) zu schaffen;
d) Weiteres Einschrauben des Betätigungselements (5), wobei der Ventilzapfen (27) an das Sperrventil (36) angelagert wird und das Sperrventil (36) geöffnet wird, sodass eine Fluidverbindung zwischen dem Ventilraum (31) und dem zweiten Fluidsystem (38) im Anschlusselement (35) geschaffen wird, wobei der Anschlag (34) des Betätigungselements (5) nun an einem hinteren Ende der Verriegelungshülse (1) ansteht, sodass ein Verschieben der Verriegelungshülse (1) nicht mehr möglich ist.

## Claims

1. A device for connecting a first fluid system (37) and a second fluid system (38), comprising a connection adapter (11),
- wherein a connection element (35) can be inserted into a quick fastener socket (23) of the connection adapter (11),
- wherein the connection adapter (11) has a switching valve (4), which is actuatable by an actuation element (5), to selectively open and close a fluid connection between a pressure chamber (12) provided in a housing (3) of the connection adapter (11) and a valve chamber (31) provided in the housing (3) via a closing part (7) on the switching valve (4), wherein the closing part (7) has a valve pin (27) projecting axially in the direction of the quick fastener socket (23) on its side facing away from the pressure chamber (12), the end of the valve pin (27) extending into an area of the quick fastener socket (23),
- wherein the actuation element (5) is designed as a rotary knob, which is screwable into a threaded bore (20) of the housing (3) for actuating the switching valve (4),
- wherein a ventilation path (40) leads out of the connection adapter (11) from the valve chamber (31), which ventilation path (40) can be closed off and opened by a ventilation shut-off means (2),
- wherein a fluid connection can be established from the pressure chamber (12) to the first fluid system (37) by a connection element (15),
- wherein the valve chamber (31) is fluidically connected to the quick fastener socket (23) for connecting the connection element (35) of the second fluid system (38), in which a locking valve (36) is provided, and
- wherein the connection adapter (11) has a locking mechanism (39) for the quick fastener socket (23), which is formed by a spring-loaded locking sleeve (1) and locking balls (25) inserted into radial bores (24),
***characterized in that***
the locking sleeve (1) sliding on the ventilation shut-off means (2) can be retracted, whereby an enlarged region (33) of the locking sleeve (1) releases the locking balls (25) to such an extent that the connection element (35) can be completely inserted into the quick fastener socket (23), wherein the connection element (35) can be sealed by a connection seal (8), and the valve pin (27) is in a position, in which the locking valve (36) in the connection element (35) is not open, and wherein the actuation element (5) is in a maximum turned-out position, in which ventilation channels (28) are open and the ventilation path (40) is unblocked;
that the ventilation shut-off means (2) can be moved together with the actuation element (5) by turning and screwing the actuation element (5) and closes the ventilation channels (28), so that the valve chamber (31) can be hermetically sealed, wherein a main valve and also with the locking valve (36) are also still closed, wherein the actuation element (35) has a mechanical stop (34) blocking the locking mechanism (39) in the locked position, when the ventilation shut-off means (2) closes the ventilation path (40), wherein a lock of the quick fastener socket (23) can no longer be released, since the locking sleeve (1) abuts against the mechanical stop (34) provided on the actuation element (5) before the locking balls (25) can be released, and wherein the actuation element (5) is already in contact with a valve head (18);
that by further screwing in the actuation element (5), the switching valve (4) and thus the closing part (7) and the valve pin (27) can be moved towards the quick fastener socket (23) and first open the main valve to establish the fluid connection between the pressure chamber (12) and the valve chamber (31), and that by further screwing in the actuation element 85), the valve pin (27) can be added to the locking valve (36) and opens the locking valve (36) to establish a fluid connection between the valve chamber (31) and the second fluid system (38) in the connection element (35), wherein the mechanical stop (34) of the actuation element (5) now abuts against a rear end of the locking sleeve (1), so that it is no longer possible to move the locking sleeve (1).

2. The device according to claim *1, **characterized in that*** the ventilation shut-off means (2) is shaped like a sleeve and is arranged on the housing (3) so that it may slide along a valve axis (13).

3. The device according to claim 2, ***characterized in that*** a sealing element (6) is provided on the housing (3), wherein the ventilation shut-off means (2) comes into sealing engagement with the sealing element upon closing off the ventilation path (40).

4. The device according to any of the claims 1 to 3, ***characterized in that*** the actuation element (5) is rotatably connected to the ventilation shut-off means (2).

5. A method for connecting a first fluid system (37) with a second fluid system (38),
- wherein a connection element (35) is inserted into a quick fastener socket (23) of the connection adapter (11),
- wherein the connection adapter (11) has a switching valve (4), which is actuated by an actuation element (5), to selectively open and close a fluid connection between a pressure chamber (12) provided in a housing (3) of the connection adapter (11) and a valve chamber (31) provided in the housing (3) via a closing part (7) on the switching valve (4), wherein the closing part (7) has a valve pin (27) projecting axially in the direction of the quick fastener socket (23) on its side facing away from the pressure chamber (12), the end of the valve pin (27) extending into an area of the quick fastener socket (23),
- wherein the actuation element (5) is designed as a rotary knob, which is screwed into a threaded bore (20) of the housing (3) for actuating the switching valve (4),
- wherein a ventilation path (40) leads out of the connection adapter (11) from the valve chamber (31), which ventilation path (40) is closed off and opened by a ventilation shut-off means (2),
- wherein a fluid connection is established from the pressure chamber (12) to the first fluid system (37) by a connection element (15),
- wherein the valve chamber (31) is fluidically connected to the quick fastener socket (23) for connecting the connection element (35) of the second fluid system (38), and
- wherein the connection adapter (11) has a locking mechanism (39) for the quick fastener socket (23), which is formed by a spring-loaded locking sleeve (1) and locking balls (25) inserted into radial bores (24),
***characterized in that***
for connecting, the following steps are performed:
a) Retracting of the locking sleeve (1) sliding on the ventilation shut-off means (2), whereby an enlarged region (33) of the locking sleeve (1) releases the locking balls (25), and the connection element (35) is completely inserted into the quick fastener socket (23) and is sealed by a connection seal (8) and the valve pin (27) is in a position, in which the locking valve (36) in the connection element (35) is not open, and wherein the actuation element (5) is in a maximum turned-out position, in which ventilation channels (28) are open and the ventilation path (40) is unblocked;
b) turning and screwing in of the actuation element (5), wherein first only the ventilation shut-off means (2) is moved together with the actuation element (5) and closes the ventilation channels (28), so that the valve chamber (31) can be hermetically sealed, wherein a main valve and also with the locking valve (36) are also still closed, wherein the actuation element (35) has a mechanical stop (34) blocking the locking mechanism (39) in the locked position, when the ventilation shut-off means (2) closes the ventilation path (40), wherein a lock of the quick fastener socket (23) can no longer be released, since the locking sleeve (1) would abut against the mechanical stop (34) provided on the actuation element (5), before the locking balls (25) can be released, and wherein the actuation element (5) is already in contact with a valve head (18) to ensure that a premature opening of the main valve is not possible;
c) further screwing in of the actuation element (5), wherein the switching valve (4) and thus the closing part (7) and the valve pin (27) are moved towards the quick fastener socket (23), wherein first the main valve is opened to establish the fluid connection between the pressure chamber (12) provided in the connection element (35) and the valve chamber (31);
d) further screwing in of the actuation element (5), wherein the valve pin (27) is added to the locking valve (36) and the locking valve (36) is opened, so that a fluid connection between the valve chamber (31) and the second fluid system (38) in the connection element (35) is established, wherein the mechanical stop (34) of the actuation element (5) now abuts against a rear end of the locking sleeve (1), so that it is no longer possible to move the locking sleeve (1).

## Revendications

1. Dispositif de liaison d'un premier système de fluide (37) à un second système de fluide (38) comprenant un adaptateur de raccordement (11),
- dans lequel un élément de raccordement (35) peut être enfiché dans une douille à fermeture rapide (23) de l'adaptateur de raccordement (11),
- dans lequel l'adaptateur de raccordement (11) présente une soupape de commutation (4) qui peut être actionnée par l'intermédiaire d'un élément d'actionnement (5) pour libérer et fermer sélectivement une liaison fluidique entre une chambre de pression (12) prévue dans un boîtier (3) de l'adaptateur de raccordement (11) et une chambre de soupape (31) prévue dans le boîtier (3) par l'intermédiaire d'une pièce de fermeture (7) sur la soupape de commutation (4), dans lequel la pièce de fermeture (7) présente, sur son côté opposé à la chambre de pression (12), la tige de soupape (27) faisant saillie axialement en direction de la douille à fermeture rapide (23), dont l'extrémité s'étend jusque dans la zone de la douille à fermeture rapide (23),
- dans lequel l'élément d'actionnement (5) est conçu comme une poignée rotative qui peut être vissée dans un alésage fileté (20) du boîtier (3) pour actionner la soupape de commutation (4),
- dans lequel une voie d'aération (40) sort de l'adaptateur de raccordement (11) à partir de la chambre de soupape (31), laquelle voie d'aération (40) peut être fermée et ouverte par une obturation d'aération (2),
- dans lequel une liaison fluidique peut être établie entre la chambre de pression (12) et le premier système de fluide (37) par l'intermédiaire d'un organe de raccordement (15),
- dans lequel la chambre de soupape (31) est en liaison fluidique avec la douille à fermeture rapide (23) pour raccorder l'élément de raccordement (35) du second système de fluide (38), dans lequel une soupape d'obturation (36) est prévue, et
- dans lequel l'adaptateur de raccordement (11) présente un mécanisme de verrouillage (39) pour la douille à fermeture rapide (23), lequel est formé par une douille de verrouillage (1) sollicitée par un ressort et des billes d'obturation (25) insérées dans des alésages (24),
**caractérisé en ce que** le manchon de verrouillage (1) glissant sur l'obturation d'aération (2) est rétractable, moyennant quoi une zone (33) élargie du manchon de verrouillage (1) libère les billes d'obturation (25) jusqu'au point où l'élément de raccordement (35) peut être entièrement inséré dans la douille à fermeture rapide (23), dans lequel l'élément de raccordement (35) peut être rendu étanche par un joint de raccordement (8) et la tige de soupape (27) est alors dans une position dans laquelle la soupape d'obturation (36) dans l'élément de raccordement (35) n'est pas ouverte, et
dans lequel l'élément d'actionnement (5) se trouve dans une position dévissée au maximum, dans laquelle des canaux d'aération (28) sont ouverts et la voie d'aération (40) est libérée ;
**en ce que** l'obturation d'aération (2) peut être déplacée avec l'élément d'actionnement (5) par rotation et vissage de l'élément d'actionnement (5) et ferme les canaux d'aération (28), de sorte que la chambre de soupape (31) peut être fermée hermétiquement, dans lequel une soupape principale et également la soupape d'obturation (36) sont encore fermées, dans lequel l'élément d'actionnement (5) présente une butée (34), qui bloque le mécanisme de verrouillage (39) dans la position verrouillée lorsque l'obturation d'aération (2) ferme la voie d'aération (40), dans lequel une obturation de la douille à fermeture rapide (23) ne peut plus être libérée, car le manchon de verrouillage (1) est en contact avec la butée (34) sur l'élément d'actionnement (5) avant que les billes d'obturation (25) puissent être libérées, et dans lequel l'élément d'actionnement (5) est déjà en contact avec une tête de soupape (18),
**en ce que,** en continuant à visser l'élément d'actionnement (5), la soupape de commutation (4) et donc la pièce de fermeture (7) et la tige de soupape (25) peuvent être déplacées en direction de la douille à fermeture rapide (23) et ouvrent d'abord la soupape principale afin de créer la liaison fluidique entre la chambre de pression (12) et la chambre de soupape (31), et **en ce que**, en continuant à visser l'élément d'actionnement (5), la tige de soupape (27) peut être appliquée contre la soupape d'obturation (36) et ouvre la soupape d'obturation (36) pour créer une liaison fluidique entre la chambre de soupape (31) et le second système de fluide (38) dans l'élément de raccordement (35), dans lequel la butée (34) de l'élément d'actionnement (5) est maintenant en butée contre une extrémité arrière du manchon de verrouillage (1), de sorte qu'un déplacement du manchon de verrouillage (1) n'est plus possible.

2. Dispositif selon la revendication 1, **caractérisé en ce que** l'obturation d'aération (2) est réalisée en forme de douille et est agencée sur le boîtier (3) de manière à pouvoir être déplacée le long d'un axe de soupape (13).

3. Dispositif selon la revendication 2, **caractérisé en ce qu'**un élément d'étanchéité (6) est prévu sur le boîtier (3), sur lequel l'obturation d'aération (2) vient en prise de manière étanche lors de la fermeture de la voie d'aération (40).

4. Dispositif selon l'une des revendications 1 à 3, **caractérisé en ce que** l'élément d'actionnement (5) est relié rotatif à l'obturation d'aération (2).

5. Procédé de liaison d'un premier système de fluide (37) à un second système de fluide (38), dans lequel un élément de raccordement (35) est enfiché dans une douille à fermeture rapide (23) d'un adaptateur de raccordement (11),
dans lequel l'adaptateur de raccordement (11) présente une soupape de commutation (4) qui est actionnée par l'intermédiaire d'un élément d'actionnement (5) pour libérer et fermer sélectivement une liaison fluidique entre une chambre de pression (12) prévue dans un boîtier (3) de l'adaptateur de raccordement (11) et une chambre de soupape (31) prévue dans le boîtier (3) par l'intermédiaire d'une pièce de fermeture (7) sur la soupape de commutation (4), dans lequel la pièce de fermeture (7) présente, sur son côté opposé à la chambre de pression (12), la tige de soupape (27) faisant saillie axialement en direction de la douille à fermeture rapide (23), dont l'extrémité s'étend jusque dans la zone de la douille à fermeture rapide (23), dans lequel l'élément d'actionnement (5) est réalisé sous la forme d'une poignée rotative qui est vissée dans un alésage fileté (20) du boîtier (3) pour actionner la soupape de commutation (4), dans lequel une voie d'aération (40) sort de l'adaptateur de raccordement (11) à partir de la chambre de soupape (31), laquelle voie d'aération (40) est fermée et ouverte par une obturation d'aération (2), dans lequel une liaison fluidique est établie entre la chambre de pression (12) et le premier système de fluide (37) par l'intermédiaire d'un organe de raccordement (15), dans lequel la chambre de soupape (31) est en liaison fluidique avec la douille à fermeture rapide (23) pour le raccordement de l'élément de raccordement (35) du second système de fluide (38), et dans lequel l'adaptateur de raccordement (11) présente un mécanisme de verrouillage (39) pour la douille à fermeture rapide (23), lequel est formé par une douille de verrouillage (1) sollicitée par un ressort et des billes d'obturation insérées dans des alésages (23),
**caractérisé en ce que,** pour la liaison, les étapes suivantes sont réalisées :
a) retrait de la douille de verrouillage (1) glissant sur l'obturation d'aération (2), moyennant quoi une zone (33) élargie de la douille de verrouillage (1) libère les billes d'obturation (25) et l'élément de raccordement (35) est complètement inséré dans la douille à fermeture rapide (23) et l'élément de raccordement (35) est rendu étanche par un joint de raccordement (8) et la tige de soupape (27) est alors dans une position, dans laquelle une soupape d'obturation (36) dans l'élément de raccordement (35) n'est pas ouverte, et dans lequel l'élément d'actionnement (5) se trouve dans une position dévissée au maximum, dans laquelle des canaux d'aération (28) sont ouverts et la voie d'aération (40) est libérée,
b) rotation et vissage de l'élément d'actionnement (5), dans lequel seule l'obturation d'aération (2) est d'abord déplacée avec l'élément d'actionnement (5) et ferme les canaux d'aération (28), de sorte que la chambre de soupape (31) est fermée hermétiquement, dans lequel une soupape principale et également une soupape d'obturation (36) sont encore fermées, dans lequel l'élément d'actionnement (5) présente une butée (34) qui bloque le mécanisme de verrouillage (39) dans la position verrouillée lorsque l'obturation d'aération (2) ferme le trajet d'aération (40), dans lequel une obturation de la douille à fermeture rapide (23) ne peut plus être libérée, car la douille de verrouillage (1) se trouverait en butée (34) sur l'élément d'actionnement (5) avant que les billes d'obturation (25) ne soient libérées, et dans lequel l'élément d'actionnement (5) est déjà en contact avec une tête de soupape (18), et garantit ainsi qu'une ouverture prématurée de la soupape principale n'est pas possible ;
c) poursuite du vissage de l'élément d'actionnement (5), dans lequel la soupape de commutation (4) et donc la pièce de fermeture (7) et la tige de soupape (27) sont déplacées en direction de la douille à fermeture rapide (23), moyennant quoi d'abord la soupape principale est ouverte pour créer une liaison fluidique entre une chambre de pression (12) qui est prévue dans l'adaptateur de raccordement (11) et la chambre de soupape (31) ;
d) poursuite du vissage de l'élément d'actionnement (5), dans lequel la tige de soupape (27) est montée sur la soupape d'obturation (36) et la soupape d'obturation (36) est ouverte, de sorte qu'une liaison fluidique est créée entre la chambre de soupape (31) et le second système de fluide (38) dans l'élément de raccordement (35), dans lequel la butée (34) de l'élément d'actionnement (5) est maintenant en butée contre une extrémité arrière de la douille de verrouillage (1), de sorte qu'un déplacement de la douille de verrouillage (1) n'est plus possible.
